# EUROPEAN PATENT APPLICATION

(11) **EP 4 269 757 A1**
(43) Date of publication of application: **01.11.2023**
(21) Application number: 22170415.8
(22) Date of filing: 28.04.2022
(51) Int. Cl.: F01K 19/02, F01K 25/10

(54) **METHOD FOR RECOVERING ENERGY**

(71) Applicant: Borealis AG, 1020 Vienna (AT)
(72) Inventor: ZITTING, Samuli, 06850 Kulloo (FI); MATIKAINEN, Pasi, 06850 Kullo (FI); KUUSISTO, Mika, 06101 Porvoo (FI); HEDVALL, Claes, 444 86 Stenungsund (SE); VIHAVAINEN, Miika, 06850 Kulloo (FI); ELOVAINIO, Erno, 06101 Porvoo (FI); ERNST, Peter, 2320 Schwechat (AT)
(74) Representative: Maiwald GmbH

(57) **Abstract**

The present invention relates to a method for recovering energy comprising the steps of:
a) Providing a hot fluid stream;
b) Thermally contacting the hot fluid stream with an aqueous condensate in a heat exchanger, thereby transferring heat from the hot fluid stream to the aqueous condensate and vaporizing at least part of the aqueous condensate to obtain a steam stream having a temperature Ti and a pressure pi;
c) Subjecting the steam stream to at least one compressing step(s) to obtain a compressed steam stream having a pressure p₂; and
d) Using the compressed steam stream for energy recovery thereby obtaining a stream comprising an aqueous condensate,
wherein
- the ratio of pressure p₂ to pressure pi, p₂/p₁, is 5 to 50;
a facility for recovering energy comprising one or more means for compressing the steam stream having a temperature Ti and a pressure pi to obtain a compressed steam stream having a pressure p₂, and
the use of one or more means for compressing a steam stream connected in series in said method or facility for compressing a steam stream having a temperature Ti and a pressure pi to obtain a compressed steam stream having a pressure p₂ for direct energy recovery.

## Description

The present invention relates to a method for recovering energy in which thermal energy is transferred in a heat exchanging step from a hot fluid stream to an aqueous condensate thereby obtaining a steam stream, which is then subjected to at least one heating and compressing step from which a heated and compressed steam stream is obtain for energy recovery.

### Technical background

In connection with the endeavours for reducing carbon dioxide emission one task is to reduce consumption of carbonaceous primary energy.

Thereby one focus also turned on recovering energy in form of heated or compressed fluids, which can be used as source of energy, e.g. in industrial processes.

Industrial processes, like chemical production processes, such as processes for polymerizing polymers, often consume a lot of thermal or electrical energy, e.g. for heating or boiling streams to the required temperature and pressure for use or reuse or energizing the production facility of the chemical production process.

On the other hand at lot of waste heat is produced, e.g. by cooling product streams. However, most of these cooling streams have a too low temperature to be directly reused as heating media or producing electrical energy.

As an example, well established licensing multistage polymerization processes for polymerizing polyolefins are, amongst others, e.g. Borstar^{®} from Borealis AG or Spheripol^{™}

### HLZ:RW

from LyondellBasell. In said processes two or more polymerization stages are connected in series followed by a downstream process for processing the polymerized polyolefin. In each of the polymerization stages and the downstream process waste heat from cooling down the product streams is obtained which presently is mostly wasted.

WO 2009/010514 A1 and WO 2011/000925 A1 disclose methods for recovering heat from the cooling fluid used for cooling a polymerization reaction in a loop reactor by transferring thermal energy from said cooling fluid to a working fluid in one heat exchanging step, whereby the working fluid is phase converted thereby providing energy in form of heat and/or electrical and/or thermal power back to the polymerization process. These methods, however, are only adapted for the polymerization processes in loop reactors and require several intermediate streams for transferring thermal energy, which inevitably leads to energy loss and reduced efficiency.

Thus, there is a need for a method for recovering energy with high efficiency, which can be applied for all kinds of waste heat produced not only in industrial processes but also in other circumstances in which waste heat is produced, such as power generation, engines, electronics or housing, only to mention several examples.

It has surprisingly been found that when transferring heat from a hot fluid stream from any heat source to an aqueous condensate, thereby obtaining a steam stream, said steam stream can be efficiently subjected to one or more heating and compressing steps for producing a heated and compressed steam stream having a temperature and pressure for direct use in energy recovery, suitably as heating medium.

### Summary of the invention

The present invention relates to a method for recovering energy comprising the steps of:
a) Providing a hot fluid stream;
b) Thermally contacting the hot fluid stream with an aqueous condensate in a heat exchanger, thereby transferring heat from the hot fluid stream to the aqueous condensate and vaporizing at least part of the aqueous condensate to obtain a steam stream having a temperature T₁ and a pressure pi;
c) Subjecting the steam stream to at least one compressing step(s) to obtain a compressed steam stream having a pressure p₂; and
d) Using the compressed steam stream for energy recovery thereby obtaining a stream comprising an aqueous condensate,
wherein
- the ratio of pressure p₂ to pressure p₁, p₂/p₁ is 5 to 50.

Further, the present invention relates to a facility for recovering energy comprising
- a heat exchanger for transferring heat from a hot fluid stream to an aqueous condensate to obtain a steam stream having a temperature T₁ and a pressure pi;
- one or more, preferably 1 to 5, more preferably 2 to 4, most preferably 2 or 3 means for compressing the steam stream having a temperature T₁ and a pressure p₁ to obtain a compressed steam stream having a temperature T₂ and a pressure p₂ connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series;
- means for using the compressed steam stream having a pressure p₂ for energy recovery thereby obtaining a stream comprising an aqueous condensate;
- means for transporting the steam stream from a heat exchanger to the first means for compressing the steam stream;
- optionally means for transporting the compressed steam stream from one upstream means for compressing the steam stream to the next downstream means for compressing the steam stream in the series of means for compressing the steam stream; and
- means for transporting the compressed steam stream having a pressure p₂ from the last means for compressing the steam stream in the series to the means for using the compressed steam stream having a pressure p₂ for energy recovery.

Still further, the present invention relates to the use of one or more, preferably 1 to 5, more preferably 2 to 4, most preferably 2 or 3 means for compressing a steam stream connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series, in the method or the production facility both as described above or below for compressing a steam stream having a temperature T₁ and a pressure p₁ to obtain a compressed steam stream having a pressure p₂ for direct energy recovery.

"Direct use" or "direct energy recovery" in the sense of the present invention means that the compressed steam stream is used as source of energy, such as source for heating. The compressed steam stream thereby can be applied as source of energy without further manipulation of temperature and/or pressure of the compressed steam stream.

### Brief description of the figures

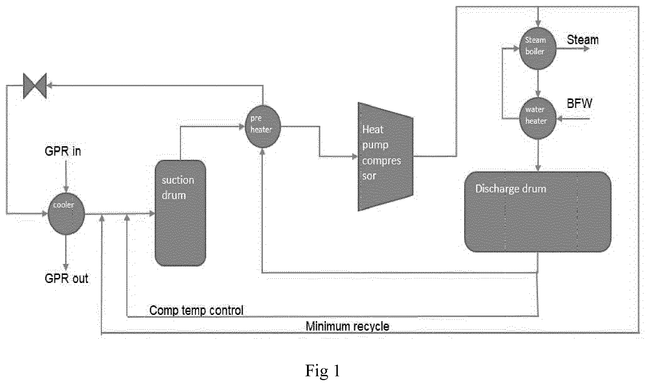

Figure 1 shows a schematic overview of a state of the art heat recovery stage from a fluidized bed gas phase reactor in which heat is transferred from the circulation gas stream in a heat exchanging step to a working fluid. The heat of the working fluid is used for vaporizing an aqueous condensate to obtain a steam stream for further use in the polymerization process.

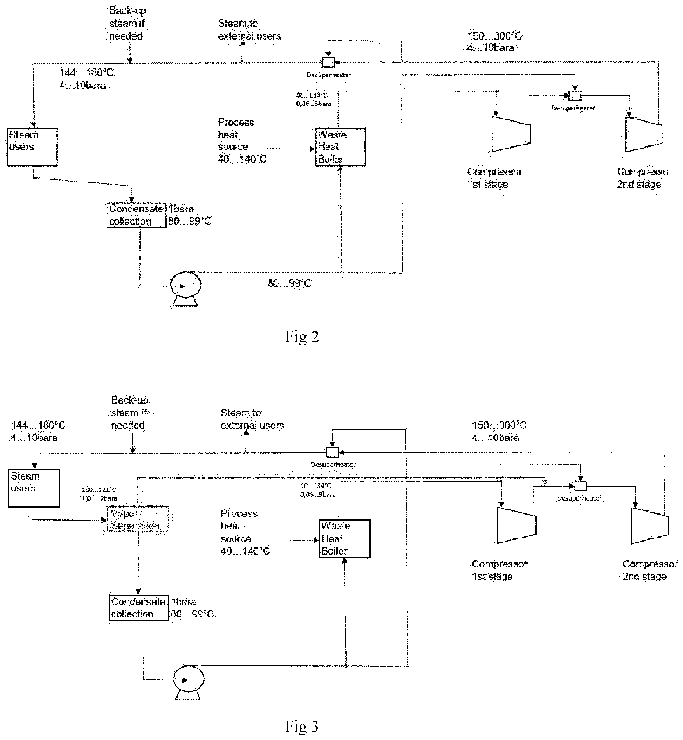

Figure 2 shows a general schematic overview of one embodiment of the inventive method in which heat is transferred from a hot fluid stream to an aqueous condensate which is vaporized and a steam stream is obtained. Said steam stream is subjected to several subsequent compressing steps in which a compressed steam stream is obtained with a temperature and pressure in a range, which allows direct use of said compressed steam stream in energy recovery. After use in energy recovery the condensed steam stream is reused for heat transferral.
Figure 3 shows a general schematic overview of another embodiment of the inventive method in which the condensed steam stream after use in energy recovery is flashed, whereby the pressure of the condensed steam stream is reduced. The flashed condensate stream is separated into a second steam stream and the aqueous condensate. The aqueous condensate is reused for heat transferral whereas the second steam stream is combined with the compressed steam stream during the subsequent compressing steps.

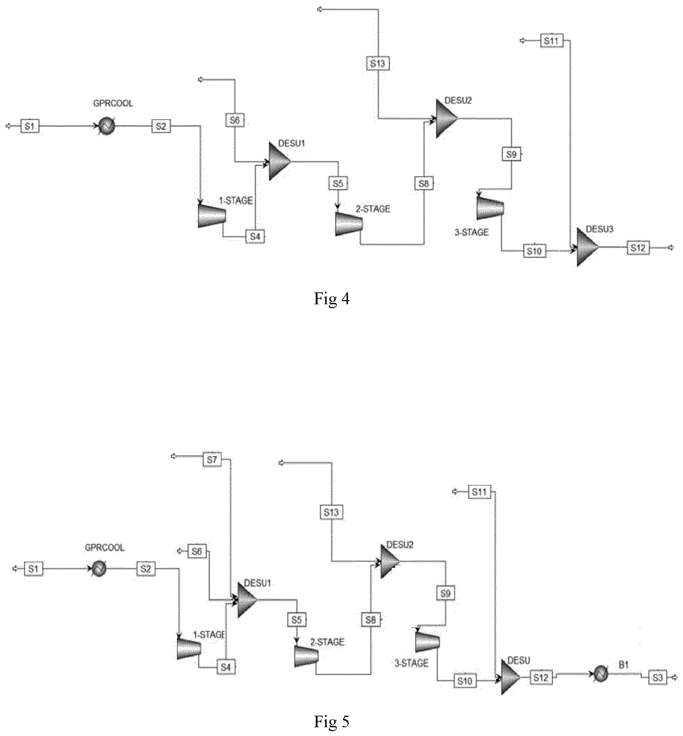

Figure 4 shows a projected example for the embodiment of Figure 2. The projected example is further discussed below in the example section.
Figure 5 shows a projected example for the embodiment of Figure 3. The projected example is further discussed below in the example section.

### Detailed description of the invention

### Method

In a first aspect the present invention relates to a method for recovering energy comprising the steps of:
a) Providing a hot fluid stream;
b) Thermally contacting the hot fluid stream with an aqueous condensate in a heat exchanger, thereby transferring heat from the hot fluid stream to the aqueous condensate and vaporizing at least part of the aqueous condensate to obtain a steam stream having a temperature T₁ and a pressure pi;
c) Subjecting the steam stream to at least one compressing step(s) to obtain a compressed steam stream having a pressure p₂; and
d) Using the compressed steam stream for energy recovery thereby obtaining a stream comprising an aqueous condensate,
wherein
- the ratio of pressure p₂ to pressure pi, p₂/p₁, is 5 to 50.

The hot fluid stream preferably has a temperature T_{f} of from 20 to 150°C, more preferably from 25 to 130°C, most preferably from 30 to 110°C.

Thus, the method of the present invention can also be used for recovering energy from fluid streams with moderate temperature. The term "hot" in this connection therefore only means that the temperature T_{f} of the hot fluid stream is higher than the temperature T₀ of the first heat transfer fluid before entering the first heat exchanger so that heat can be exchanged from the hot fluid stream to the first heat transfer fluid.

The hot fluid stream can provided from any kind of fluid stream of elevated temperature. Sources for the hot fluid stream can be industrial processes or any kind of other circumstances in which waste heat is produced in form of fluid streams of elevated temperature, such as power generation, engines, electronics or housing.

In one preferred embodiment the hot fluid stream is provided from an industrial process, more preferably from a chemical production process.

The chemical production process can be any process for producing a chemical product, in which heat can recovered from hot fluid streams.

In one specific embodiment the chemical production process is a polymerization process. The polymerization process is preferably a process for polymerizing alpha-olefin polymers. The polymerization process preferably is a low pressure process for polymerizing alpha-olefin polymers in the presence of a polymerization catalyst.

The polymerization catalyst can be any suitable catalyst for polymerizing alpha-olefin polymers, such as a Ziegler-Natta catalyst or a metallocene catalyst in supported or non-supported form.

The alpha-olefin polymer can be a homopolymer or copolymer of ethylene and/or alpha-olefin monomers having from 3 to 12 carbon atoms, such as ethylene, propylene, 1-butene, 1-hexene or 1-octene.

Preferred are ethylene homopolymers or copolymers with one or more comonomers selected from alpha-olefin comonomers having from 3 to 12 carbon atoms, such as propylene, 1-butene, 1-hexene and/or 1-octene and propylene homopolymers or copolymers with one or more comonomers selected ethylene or alpha-olefin comonomers having from 4 to 12 carbonatoms, such as ethylene, 1-butene, 1-hexene and/or 1-octene.

The polymerization process can be a single stage polymerization process or a multistage polymerization process.

In a single stage polymerization process the polymer polymerization is conducted in a single polymerization reactor which can be selected from a slurry phase reactor, such as a loop reactor, and a gas phase reactor, such as a fluidized bed gas phase reactor.

The polymerization process is preferably a multistage polymerization process in which two or more reactors, preferably two to six reactors, such as two, three, four, five or six reactors are connected in series. The two or more reactors are usually selected from slurry phase reactors, such as loop reactors, and gas phase reactors, such as fluidized bed gas phase reactors. Downstream of the reactor stage(s) of the polymerization process the polymer is further processed. In said downstream processing stages the polymer is preferably separated from non-reacted monomer and other components of the production stream. Further, the polymer is preferably compounded in an extruder with applicable additives as known in the art.

Typical multistage polymerization processes in which the method of the invention is applicable are amongst others, e.g. Borstar^{®} PE and Borstar^{®} PP from Borealis AG or Spheripol^{™} from LyondellBasell.

The hot fluid stream can be provided from any process stage of the chemical production process, such as one or more or all production stages, in which the chemical product or any precursors or intermediates are produced, and/or the processing stages downstream from the production stage(s), such as the purification stage or the compounding stage.

It is especially preferred that the hot fluid stream is not a cooling stream from a heat exchange step.

Instead it is preferred that the hot fluid stream is a stream which is directly obtained without indirect heat exchange or energy transfer.

The hot fluid stream can be a slurry stream, a liquid stream or a gaseous stream.

When being a slurry stream or a liquid stream, the hot fluid stream preferably has a temperature T_{f} in the range of from 20 to 120°C, more preferably from 25 to 110°C, most preferably from 30 to 100°C.

When being a gaseous stream, the hot fluid stream preferably has a temperature T_{f} in the range of from 50 to 150°C, preferably from 55 to 130°C, most preferably from 65 to 110°C and a pressure in the range of from 5 to 50 bar, preferably from 8 to 40 bar, most preferably from 10 to 35 bar.

In the embodiment of a chemical production process the hot fluid stream is preferably a hot product stream.

In the embodiment of a polymerization process as described above the hot product stream is preferably selected from the hot polymer slurry stream of a slurry phase polymerization stage, the hot circulation gas stream from a gas phase polymerization stage or the hot polymer stream from processing stages downstream from the polymerization stage(s), such as from the extrusion stage.

The hot fluid stream can also be the primary water circuit of extruder in the processing stages downstream from the polymerization stage(s), such as from the extrusion stage.

The hot fluid stream provided from the polymerization process preferably comprises monomer, optionally comononer, both as defined above, and optionally chain transfer agent, such as hydrogen.

When being the hot polymer slurry stream of a slurry phase polymerization stage or the hot polymer stream from processing stages downstream from the polymerization stage(s) the hot fluid stream preferably comprises polymer.

The hot fluid stream is preferably directly transported to the heat exchanging step. Thereby, "directly" means that the hot fluid stream is not subjected to any further treatment as to manipulate the temperature of the hot fluid stream.

In the heat exchanger the hot fluid stream is thermally contacted with an aqueous condensate. Thereby heat is transferred from the hot fluid stream to the aqueous condensate and a heated aqueous condensate and a fluid stream having a temperature T_{f1} are obtained.

T_{f1} is lower than the temperature T_{f} of the hot fluid stream.

T_{f1} is preferably in the range of from 15 to 145°C, more preferably 20 to 125°C, still more preferably 25 to 98°C.

The aqueous condensate is preferably liquid water such as service water. It is preferred that the aqueous condensate is only used as used in a closed energy recovery cycle in which the aqueous condensate is used as heating and cooling medium and for producing electrical energy.

It is preferred that the aqueous condensate is not separated from a product stream of an industrial production process or introduced into a product stream of an industrial production process.

The aqueous condensate is preferably at least partly liquid such as at least 60 wt% liquid, preferably at least 75 wt% liquid, most preferably at least 90 wt% liquid upon the temperature and pressure conditions when being introduced into the heat exchanger. The non liquid part of the aqueous condensate thereby is gaseous, i.e. up to 40 wt%, preferably up to 25 wt%, most preferably up to 10 wt%. In a preferred embodiment the aqueous condensate is 100 wt% liquid upon the temperature and pressure conditions when being introduced into the heat exchanger.

When being introduced into the heat exchanger the aqueous condensate preferably has a temperature T_{c} of from 40°C to 99°C, preferably from 50°C to 98°C, most preferably from 55°C to 95°C and/or a pressure p_{c} of from 1 to 10 bar(a), preferably from 2 to 9 bar(a), most preferably from 3 to 8 bar(a).

During heat transferral the heated aqueous condensate is preferably at least partially vaporised so that a steam stream having a temperature T₁ and a pressure p₁ is obtained. In some embodiments the heated aqueous condensate is totally vaporized.

In the case that the heated aqueous condensate in only partially vaporized the remaining aqueous condensate can be separated from the steam stream and recycled to the heat exchanger as aqueous condensate. Aqueous condensate can also be removed from the bottom of the heat exchanger, e.g. for removing unwanted components, such as salts, heavier components, rust or other dirt, from the heat exchanger.

The steam stream preferably has a temperature T₁ in the range of from 30°C to 150°C, preferably from 40°C to 135°C, most preferably from 50°C to 100°C and/or a pressure p₁ in the range of from 0.04 bar(a) to 4.76 bar(a), preferably from 0.07 to 3.13 bar(a), most preferably from 0.12 to 1.01 bar(a).

For direct use e.g. as heat source or for producing electrical energy the temperature T₁ and the pressure p₁ of the steam stream usually are too low so that no efficient energy recovery is possible.

Consequently, in the inventive method the pressure of the steam stream is increased to pressure p₂.

For increasing the pressure of the steam stream the steam stream is subjected to at least one, such as 1-5, preferably 2-4, most preferably 2-3 compressing step(s) to obtain a heated and compressed steam stream having a temperature T₂ and a pressure p₂.

For the compressing step(s) preferably at least one, such as one or two, preferably one heat pump compressor(s) are used. Each heat pump compressor preferably comprises at least one, preferably 1 to 5, preferably 2-4, most preferably 2-3 compression stages connected in series. The at least one heat pump compressor(s) is/are preferably part of a heat pump as known in the art.

In the case that more than one compressing steps are used, the compressing steps are preferably arranged subsequently, preferably by using one or more heat pump compressors in which at least one, preferably 1 to 5, preferably 2-4, most preferably 2-3 compression stages are arranged subsequently.

In a subsequent arrangement the steam stream is firstly subjected to a first compressing step, preferably in a first upstream compression stage of a heat pump compressor, whereby the pressure of the steam stream is increased by a first increment in a first step. The steam stream compressed in said first step is then subjected to the next downstream compressing step, preferably in a second compression stage of the heat pump compressor, which is situated downstream from the first upstream compression stage of the heat pump exchanger, whereby the pressure of the steam stream is increased by a second increment in a second step. This is optionally repeated until in the last downstream heat exchanging step, preferably in the last downstream compression stage of the heat pump compressor, the compressed steam stream having a pressure p₂ is obtained.

During the at least one, such as 1-5, preferably 2-4, most preferably 2-3 compressing step(s) as discussed above the temperature of the steam stream is increased to the temperature T₂.

In the case that more than one compressing steps are used the temperature of the steam stream usually in increased in increments during each compressing steps parallel to the increments of the pressure increase as discussed above.

During the at least one, such as 1 to 5, preferably 2 to 4, most preferably 2 or 3 compressing step(s) as discussed above the temperature of the steam stream is preferably increased to the temperature T₂.

In the case that more than one compressing steps are used the temperature of the steam stream usually is increased in increments during each compressing steps parallel to the increments of the pressure increase as discussed above.

The increments of temperature and pressure increase in the subsequent compressing steps usually depend on the volume stream of the steam stream and the dimensions and the power of each heat pump compressor.

It is preferred that the increment of pressure increase, determined as ratio of pₒᵤₜ/pᵢₙ in each compressing step is independently in the range of from 1.3 to 3, preferably from 1.5 to 2.5. Preferably the increment of temperature increase in each compressing step is independently in the range of from 25 to 250 K, preferably from 50 to 200 K.

In some embodiments the temperature increase in a compressing step can result in a temperature of the compressed steam stream of about 300°C. A temperature above 300°C is undesirable due to possible material weakness or even failure of the affected pipes, armatures and fittings.

It is therefore preferred that the temperature of the compressed steam stream after one or more, preferably after each compressing step is reduced so that the temperature of the compressed steam stream does not exceed 300°C.

The temperature of the compressed steam stream can be reduced after one or more, preferably after each heating and compressing step by combining the compressed steam stream with a aqueous condensate of higher pressure, preferably with a portion of the aqueous condensate of step d).

The compressed steam stream is preferably combined with an aqueous condensate of higher pressure in a de-superheater.

The amount of compressing steps is preferably projected by considering the expected pressure increase increments of each compressing step in order to obtain a compressed steam stream having a pressure p₂.

The compressed steam stream having the pressure p₂ preferably has a temperature T₂.

It is preferred that temperature T₂ is in the range of from 125°C to 300°C, preferably from 135°C to 275°C, most preferably from 140°C to 250°C and/or pressure p₂ is in the range of from 3 bar(a) to 12 bar(a), preferably from 4 to 10 bar(a), most preferably from 5 to 8 bar(a).

Temperature T₂ is preferably 50 K to 250 K, more preferably 65 K to 150 K, most preferably 75 K to 125 K higher than the temperature T₁.

The ratio of pressure p₂ to pressure pi, p₂/p₁, is 5 to 50, preferably 10 to 40, most preferably 15 to 30.

The compressed steam stream having a pressure p₂ is used for energy recovery.

One suitable means of energy recovery is using the compressed steam stream as heating medium.

At a production facility the steam stream can be used as heating medium for heating e.g. a product stream, any other stream, a part of the production site components at any stage of the chemical production process or even in the heating system of the production facility.

In a polymerization process preferably as discussed above the compressed steam stream can e.g. be used for replacing steam in the reboilers in the steps for recovering monomers, comonomers and other reactants of the polymerization process or for heating the flash tank in the gas phase polymerization stages.

A suitable method for thermal energy storage is e.g. a method using reversal condensation reactions, such as the chemical heat pump, which has been commercialized by Qpinch and is described e.g., amongst others, in WO 2014/016405 A1.

A suitable method for producing electricity has been commericalized by Climeon and is described e.g., amongst others, in EP 2 689 111 A1.

Spare compressed steam stream which is not used for energy recovery e.g. within an industrial process can also be used has heating medium or other forms of energy recovery, which is/are outside the industrial process.

By using the compressed steam stream having a pressure p₂ for energy recovery the temperature and pressure of the compressed steam stream is reduced to such an extent that the steam stream at least partially condensates and a stream comprising an aqueous condensate is obtained.

In the stream comprising an aqueous condensate is preferably at least partly liquid such as at least 60 wt% liquid, preferably at least 75 wt% liquid, most preferably at least 90 wt% liquid after being used for energy recovery. The non liquid part of the aqueous condensate thereby is gaseous, i.e. up to 40 wt%, preferably up to 25 wt%, most preferably up to 10 wt%. In some embodiments the aqueous condensate is 100 wt% liquid upon the temperature and pressure conditions after energy recovery.

It is preferred that the stream comprising an aqueous condensate obtained from the compressed steam stream used for heat recovery is subjected to a vapour separation step to obtain a second steam stream and an aqueous condensate.

The aqueous condensate can be used in the heat exchanger for transferring heat from the hot fluid stream to the aqueous condensate and vaporizing at least part of the aqueous condensate to obtain a steam stream having a temperature T₁ and a pressure p₁.

The second steam stream can be combined with the compressed steam stream, preferably after the first compressing step.

It can be seen from the projected examples below that when combining the second steam stream with the compressed steam stream a lower energy consumption in the compressing step(s) usually in form of electricity consumption of the heat pump compressor(s) are needed to obtain the compressed steam stream having a temperature T₂ and a pressure p₂. Consequently, the COP (Coefficient of performance for the heat pump as consumed electricity vs. produced stream is higher when combining the second steam stream with the compressed steam stream.

### Production facility

In a further aspect the present invention relates to a facility for recovering energy comprising
- a heat exchanger for transferring heat from a hot fluid stream to an aqueous condensate to obtain a steam stream having a temperature T₁ and a pressure pi;
- one or more, preferably 1 to 5, more preferably 2 to 4, most preferably 2 or 3 means for compressing the steam stream having a temperature T₁ and a pressure p₁ to obtain a compressed steam stream having a temperature T₂ and a pressure p₂ connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series;
- means for using the compressed steam stream having a pressure p₂ for energy recovery thereby obtaining a stream comprising an aqueous condensate;
- means for transporting the steam stream from the heat exchanger to the first means for compressing the steam stream;
- optionally means for transporting the compressed steam stream from one upstream means for compressing the steam stream to the next downstream means for compressing the steam stream in the series of means for compressing the steam stream; and
- means for transporting the compressed steam stream having a pressure p₂ from the last means for compressing the steam stream in the series to the means for using the compressed steam stream having a temperature T₂ and a pressure p₂ for energy recovery.

The facility can be any kind of facility in which hot fluid streams occur and can be used for energy recovery. Non limiting examples are e.g. industrial production sites such as chemical production sites, especially polymerization production sites, power generation facilities, facilities containing engines or electronics or housing.

The facility is preferably adapted for all aspects and embodiments of the inventive method for recovering steam as described above or below.

In the case of a chemical production site, the facility preferably further comprises means for producing a chemical product, such as one or more reactor(s).

Further, the facility preferably comprises means for post-production processing of the chemical product such as means for purifying the chemical product and/or means for compounding the chemical product or other means needed for processing and finishing the chemical product.

Still further, the facility preferably comprises means for transporting educts, products and/or other components used in the chemical production process to the means for producing a chemical product and from the means for producing a chemical product to the means for post-production processing of the chemical product and each means for process steps inbetween.

In a polymerization process as described above the means for producing a chemical product preferably comprise a polymerization reactor.

The polymerization reactor can be a single polymerization reactor or multiple polymerization reactors connected in series.

The single polymerization reactor can be selected from a slurry phase reactor, such as a loop reactor, and a gas phase reactor, such as a fluidized bed gas phase reactor.

The multiple polymerization reactors are preferably two or more polymerization reactors, preferably two to six polymerization reactors, such as two, three, four, five or six polymerization reactors are connected in series.

The multiple polymerization reactors are usually selected from slurry phase reactors, such as loop reactors, and gas phase reactors, such as fluidized bed gas phase reactors.

The means for processing the polymer powder downstream from the at least one polymerization reactor preferably include means for separating the polymer from the unreacted monomers, comonomers and other components of the product stream.

Further, the means for processing the polymer powder downstream from the at least one polymerization reactor preferably include means for compounding the polymer, such as an extruder.

The facility comprises at least one heat exchanger.

The facility can comprise more than one heat exchanger, such as at least one set of at least two heat exchangers connected in series.

The number of sets of at least two heat exchangers connected in series can be from 1 to 10, such as 1, 2, 3, 4, 5 or 6.

A set of at least two heat exchangers connected in series can contain 2 or more, such as 2 to 6, preferably 2, 3 or 4, most preferably 2 heat exchangers connected in series.

In a polymerization production site the number of sets of at least two heat exchangers connected in series usually depends on the number of polymerization reactors and the number of means for processing the polymer powder downstream from the at least one polymerization reactor.

One set of at least two heat exchangers connected in series can be connected to each polymerization reactor of the production facility and/or the means for processing the polymer powder downstream from the at least one polymerization reactor, preferably the means for compounding the polymer, such as an extruder.

The facility comprises one or more, preferably 1 to 5, more preferably 2 to 4, most preferably 2 or 3 means for compressing the steam stream having a temperature T₁ and a pressure p₁ to obtain a compressed steam stream having a pressure p₂.

The one or more means for compressing the steam stream are preferably connected in series. It is preferred that the one or more means for compressing the steam stream are one or more, such as one or two, preferably one heat pump compressor(s).

Each heat pump compressor preferably comprises 1 to 5, more preferably 2 to 4, most preferably 2 or 3 compression stages connected in series.

The one or more such as one or two, preferably one heat pump compressor(s) are preferably part of one or more heat pumps as known in the art.

The facility further comprises means for using the compressed steam stream having a pressure p₂ for energy recovery.

Said means for using the compressed steam stream for energy recovery can be means for using the compressed steam stream as heating medium.

In an industrial production site the means for using the steam stream as heating medium can be means for heating e.g. a product stream, any other stream, a part of the production site components at any stage of the industrial production process or even in the heating system of the production facility. Such means can be heat exchangers, reboilers or the heating system. The means for energy recovery can be means for temporary storing a high temperature and/or pressure stream before use.

The means for using the compressed steam stream for energy recovery can also be means for thermal energy storage, e.g. means for applying a method using reversal condensation reactions, such as the chemical heat pump, which has been commercialized by Qpinch and is described e.g., amongst others, in WO 2014/016405 A1.

The means for transporting the steam stream from a heat exchanger to the first means for compressing the steam stream are preferably pipes for connecting the means for transporting the steam stream from a heat exchanger with the first means for compressing the steam stream.

The heat exchanger is preferably directly connected to the first means for compressing the steam stream by the means for transporting the steam stream from a heat exchanger to the first means for compressing the steam stream. "Directly connected" thereby means that the means are not connected to any further means for manipulating the temperature or pressure of the steam stream.

In the case that more than one means for compressing the steam stream are connected in series, the facility comprises means for transporting the compressed steam stream from one upstream means for compressing the steam stream to the next downstream means for compressing the steam stream in the series of means for compressing the steam stream.

Preferably the means for transporting the compressed steam stream from one upstream means for compressing the steam stream to the next downstream means for compressing the steam stream are preferably pipes for connecting one upstream means for compressing the steam stream to the next downstream means for compressing the steam stream.

Preferably in the series of means for compressing the steam stream each upstream means for compressing the steam stream is connected to the next downstream means for compressing the steam stream via the means for transporting the compressed steam stream from one upstream means for compressing the steam stream to the next downstream means for compressing the steam stream.

The upstream and the next downstream means for compressing the steam stream can be connected directly via the means for transporting the compressed steam stream from one upstream means for compressing the steam stream to the next downstream means for compressing the steam stream. "Directly connected" thereby means that the means are not connected to any further means for manipulating the temperature or pressure of the steam stream.

It is, however, preferred that the facility further comprises means for cooling the compressed steam stream downstream of at least one, preferably each means for compressing the steam stream.

Said means for cooling the compressed steam stream downstream of at least one, preferably each means for compressing the steam stream are preferably means for combining the compressed steam stream with an aqueous condensate of higher pressure, such as with a portion of the aqueous condensate obtained from the means for using the compressed steam stream having a pressure p₂ for energy recovery.

Suitable means for cooling the compressed steam stream downstream of at least one, preferably each means for compressing the steam stream is most preferably a de-superheater as known in the art.

The facility also comprises means for transporting the compressed steam stream having a pressure p₂ from the last means for compressing the steam stream in the series to the means for using the compressed steam stream having a pressure p₂ for energy recovery.

The means for transporting the compressed steam stream having a pressure p₂ from the last means for compressing the steam stream in the series to the means for using the compressed steam stream having a pressure p₂ for energy recovery are preferably pipes for connecting, preferably directly connecting the last means for compressing the compressed steam stream having a pressure p₂ in the series to the means for using the compressed steam stream having a pressure p₂ for energy recovery. "Directly connecting" thereby means that the means are not connected to any further means for manipulating the temperature or pressure of the compressed steam stream having a pressure p₂.

It is preferred that the facility further comprises
- means for separating a second steam stream and an aqueous condensate from the stream comprising an aqueous condensate obtained from the means for using the compressed steam stream;
- means for transporting the stream comprising an aqueous condensate from the means for using the compressed steam stream to the means for separating a second steam stream and an aqueous condensate from the stream comprising an aqueous condensate; and
- means for transporting the second steam stream from the means for separating a second steam stream and an aqueous condensate to the means for cooling the compressed steam stream downstream the first upstream means for compressing the steam stream.

The means for separating a second steam stream and an aqueous condensate from the stream comprising an aqueous condensate obtained from the means for using the compressed steam stream can be any means suitable for separating a liquid stream from a gaseous stream, such as e.g. a vapour-liquid separator as known in the art.

The means for transporting the stream comprising an aqueous condensate from the means for using the compressed steam stream for energy recovery to the means for separating a second steam stream and an aqueous condensate from the stream comprising an aqueous condensate are preferably pipes for connecting, preferably directly connecting the means for using the compressed steam stream for energy recovery to the means for separating a second steam stream and an aqueous condensate from the stream comprising an aqueous condensate. "Directly connecting" thereby means that the means are not connected to any further means for manipulating the temperature or pressure of the stream comprising an aqueous condensate.

The means for transporting the second steam stream from the means for separating a second steam stream and an aqueous condensate to the means for cooling the compressed steam stream downstream the first upstream means for compressing the steam stream are preferably pipes for connecting, preferably directly connecting the means for separating a second steam stream and an aqueous condensate to the means for cooling the compressed steam stream downstream the first upstream means for compressing the steam stream. "Directly connecting" thereby means that the means are not connected to any further means for manipulating the temperature or pressure of the second steam stream.

The production facility preferably further comprises means for transporting the stream comprising an aqueous condensate from the means for using the compressed steam stream for energy recovery to the heat exchanger for transferring heat from a hot fluid stream of the chemical production process to the aqueous condensate of the stream comprising an aqueous condensate. The means for transporting the stream comprising an aqueous condensate from the means for using the compressed steam stream for energy recovery to the heat exchanger for transferring heat from a hot fluid stream to the aqueous condensate of the stream comprising an aqueous condensate are preferably pipes for connecting, preferably directly connecting the means for using the compressed steam stream for energy recovery to the heat exchanger for transferring heat from a hot fluid stream of the chemical production process to the aqueous condensate of the stream comprising an aqueous condensate. "Directly connecting" thereby means that the means are not connected to any further means for manipulating the temperature or pressure of the stream comprising an aqueous condensate.

Thereby, the means for transporting the stream comprising an aqueous condensate preferably passes through the means for separating a second steam stream and an aqueous condensate from the stream comprising an aqueous condensate obtained from the means for using the compressed steam stream for energy recovery.

### Use

In a further aspect, the present invention relates to the use of one or more, preferably 1 to 5, more preferably 2 to 4, most preferably 2 or 3 means for compressing a steam stream connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series, in the method or the production facility both as described above or below for compressing a steam stream having a pressure p₁ to obtain a compressed steam stream having a temperature T₂ and a pressure p₂ for direct energy recovery.

It is preferred that all aspects and embodiments of the one or more means for heating and compressing a steam stream connected in series and of the method or the production facility according to the invention as described above or below apply to the use of the invention.

### Detailed description of the figures and projected examples

Figure 1 shows a schematic overview of a state of the art heat recovery stage from a fluidized bed gas phase reactor in which heat is transferred from the circulation gas stream in a heat exchanging step to a working fluid. The heat of the working fluid is used for vaporizing an aqueous condensate to obtain a steam stream for further use in the polymerization process.

For increasing the heat recovery, the working fluid is subjected to a heating and compressing step in which the working fluid is firstly preheated in a preheater and then further heated and compressed in a heat pump compressor. As a result more energy can be transferred onto the aqueous condensate and the resulting steam has a higher temperature and pressure. However, since heat transferral steps are always connected with loss of energy due to suboptimal heat transfer more efficient methods of steam recovery are needed.

Figure 2 shows a general schematic overview of one embodiment of the inventive method in which heat is transferred in a heat exchanger such as a waste heat reboiler from a hot fluid stream at any stage of the chemical production process to an aqueous condensate which is vaporized and a steam stream is obtained. The hot fluid stream before entering the heat exchanger usually has a temperature of from 40 to 140°C. The aqueous condensate preferably has before entering the heat exchanger a temperature of 80 to 99°C and an elevated pressure which is about 5 to 8 bar(a). During heat transfer the aqueous condensate is vaporized and a steam stream having a temperature T₁ of from 40 to 134°C and a pressure p₁ of 0.06 to 3 bar(a) is obtained. Said steam stream is subjected to two subsequent compressing steps in two subsequent heat pump compressors in which a compressed steam stream is obtained with a temperature and pressure in the ranges of 150 to 300°C and 4 to 10 bar(a), which allows direct use of said compressed steam stream in the chemical production process. After the first and second compressing steps the temperature of the steam stream can be reduced in a desuperheater by introducing a portion of the aqueous condensate stream of temperature T₁ and pressure p₁ in the case that the temperature of the steam stream exceeds 300°C. After use in the chemical production process the steam stream is usually condensed and reused for heat transferral. The aqueous condensate cycle thereby also includes valves for directing excess steam to external users and for introducing external steam when needed. The steam stream introduced to the steam users within the production process has a temperature T₂ in the range of 144 to 180°C and a pressure p₂ of 4 to 10 bar(a). After use the steam stream is partially or fully condensed and has a temperature of 80 to 99 °C and a pressure of 1 bar(a). The condensed stream is collected in a condensate collector. For reusing the aqueous condensate in the heat transferral the pressure of the aqueous condensate is increased to the above stated 5 to 8 bar(a).

Figure 3 shows a general schematic overview of another embodiment of the inventive method in which the condensed steam stream after use in the chemical production process is separated into a second steam stream having a temperature of 100 to 121°C and a pressure of 1.01 to 2 bar(a) and the aqueous condensate. The aqueous condensate is reused for heat transferral whereas the second steam stream is combined with the heated and compressed steam stream after the first heating and compressing step.

Figure 4 shows a projected example for the embodiment of Figure 2. The example has been projected with ASPEN Plus.

An aqueous condensate stream (S1) having a temperature of 80°C, a pressure of 7 bar(a), a vapour fraction 0 wt% and a mass flow rate of 12000 kg/hr is subjected to a heat exchanging step for cooling a hot fluid stream in a heat exchanger. The aqueous condensate stream is vaporized to a steam stream having a temperature of 65°C, a pressure of 0.23 bar(a), a vapour fraction 100 wt% and a mass flow rate of 12000 kg/hr (S2). The steam stream is subjected to a first compressing step in a first compression stage of a heat pump compressor so that the steam stream has a temperature of 234°C, a pressure of 1 bar(a), a vapour fraction 100 wt% and a mass flow rate of 12000 kg/hr (S4). For cooling down the steam stream the steam stream is combined with an aqueous stream of higher pressure in a first desuperheater. The aqueous stream of higher pressure has a temperature of 80°C, a pressure of 7 bar(a), a vapour fraction 0 wt% and a mass flow rate of 1300 kg/hr (S6). After the first desuperheater the cooled steam stream has a temperature of 106°C, a pressure of 1 bar(a), a vapour fraction 100 wt% and a mass flow rate of 13300 kg/hr (S5). Said cooled steam stream is subjected to a second compressing step in a second compression stage of the heat pump compressor so that the steam stream has a temperature of 198°C, a pressure of 2 bar(a), a vapour fraction 100 wt% and a mass flow rate of 13300 kg/hr (S8). For cooling down the steam stream the steam stream is combined with an aqueous stream of higher pressure in a second desuperheater. The aqueous stream of higher pressure has a temperature of 80°C, a pressure of 7 bar(a), a vapour fraction 0 wt% and a mass flow rate of 850 kg/hr (S13). After the second desuperheater the cooled steam stream has a temperature of 125°C, a pressure of 2 bar(a), a vapour fraction 100 wt% and a mass flow rate of 14150 kg/hr (S9). Said cooled steam stream is subjected to a third compressing step in a third compression stage of the heat pump compressor so that the steam stream has a temperature of 197°C, a pressure of 4 bar(a), a vapour fraction 100 wt% and a mass flow rate of 14150 kg/hr (S10). For cooling down the steam stream the steam stream is combined with an aqueous stream of higher pressure in a third desuperheater. The aqueous stream of higher pressure has a temperature of 80°C, a pressure of 7 bar(a), a vapour fraction 0 wt% and a mass flow rate of 650 kg/hr (S11). After the third desuperheater the cooled steam stream has a temperature of 146°C, a pressure of 4 bar(a), a vapour fraction 100 wt% and a mass flow rate of 14800 kg/hr (S9). Said compressed steam stream can be used for energy recovery.

Figure 5 shows a projected example for the embodiment of Figure 3. The example has been projected with ASPEN Plus.

An aqueous condensate stream (S1) having a temperature of 80°C, a pressure of 7 bar(a), a vapour fraction 0 wt% and a mass flow rate of 11260 kg/hr is subjected to a heat exchanging step for cooling a hot fluid stream in a heat exchanger. The aqueous condensate stream is vaporized to a steam stream having a temperature of 65°C, a pressure of 0.23 bar(a), a vapour fraction 100 wt% and a mass flow rate of 11260 kg/hr (S2). The steam stream is subjected to a first compressing step in a first compression stage of a heat pump compressor so that the steam stream has a temperature of 234°C, a pressure of 1 bar(a), a vapour fraction 100 wt% and a mass flow rate of 11260 kg/hr (S4). For cooling down the steam stream the steam stream is combined with an aqueous stream of higher pressure in a first desuperheater. The aqueous stream of higher pressure has a temperature of 80°C, a pressure of 7 bar(a), a vapour fraction 0 wt% and a mass flow rate of 1200 kg/hr (S6). Additionally a second steam stream having a temperature of 101°C, a pressure of 1 bar(a), a vapour fraction 100 wt% and a mass flow rate of 840 kg/hr (S7) is introduced into the first desuperheater and combined with the other two streams. After the first desuperheater the cooled steam stream has a temperature of 107°C, a pressure of 1 bar(a), a vapour fraction 100 wt% and a mass flow rate of 13300 kg/hr (S5). Said cooled steam stream is subjected to a second compressing step in a second compression stage of the heat pump compressor so that the steam stream has a temperature of 200°C, a pressure of 2 bar(a), a vapour fraction 100 wt% and a mass flow rate of 13300 kg/hr (S8). For cooling down the steam stream the steam stream is combined with an aqueous stream of higher pressure in a second desuperheater. The aqueous stream of higher pressure has a temperature of 80°C, a pressure of 7 bar(a), a vapour fraction 0 wt% and a mass flow rate of 850 kg/hr (S13). After the second desuperheater the cooled steam stream has a temperature of 127°C, a pressure of 2 bar(a), a vapour fraction 100 wt% and a mass flow rate of 14150 kg/hr (S9). Said cooled steam stream is subjected to a third compressing step in a third compression stage of the heat pump compressor so that the steam stream has a temperature of 198°C, a pressure of 4 bar(a), a vapour fraction 100 wt% and a mass flow rate of 14150 kg/hr (S10). For cooling down the steam stream the steam stream is combined with an aqueous stream of higher pressure in a third desuperheater. The aqueous stream of higher pressure has a temperature of 80°C, a pressure of 7 bar(a), a vapour fraction 0 wt% and a mass flow rate of 650 kg/hr (S11). After the third desuperheater the cooled steam stream has a temperature of 148°C, a pressure of 4 bar(a), a vapour fraction 100 wt% and a mass flow rate of 14800 kg/hr (S9). Said compressed stream is further used for heat exchange in a second heat exchanger in which the compressed stream is condensed. The resulting aqueous condensate stream has a temperature of 144°C, a pressure of 4 bar(a), a vapour fraction 0 wt% and a mass flow rate of 14800 kg/hr (S3) and can be used for energy recovery.

The projected processes as illustrated in Figures 4 and 5 have the following energy consumption Q (Duty [kW]) and W (electrical power [kW]) and Coefficient of Performance (COP) being the ratio of consumed electricity W to produced steam as shown in Table 1:

**Table 1: energy consumption and Coefficient of Performance (COP) of the projected processes of Figures 4 and 5**

| | Figure 4 | Figure 5 |
|---|---|---|
| 1^{st} heat exchanger - Q [kW] | 7609 | 7139 |
| 1^{st} compressor - W [kW] | 1124 | 1054 |
| 2^{nd} compressor - W [kW] | 685 | 688 |
| 3^{rd} compressor - W [kW] | 565 | 568 |
| 2^{nd} heat exchanger - Q [kW] | 0 | -8768 |
| Total energy consumption [kW] | 9298 | 681 |
| Total electrical power consumption [kW] | 2374 | 2310 |
| COP | 3.8 | 3.9 |

## Claims

1. A method for recovering energy comprising the steps of:
a) Providing a hot fluid stream;
b) Thermally contacting the hot fluid stream with an aqueous condensate in a heat exchanger, thereby transferring heat from the hot fluid stream to the aqueous condensate and vaporizing at least part of the aqueous condensate to obtain a steam stream having a temperature T₁ and a pressure pi;
c) Subjecting the steam stream to at least one, such as 1-5, preferably 2-4, most preferably 2-3 compressing step(s) to obtain a compressed steam stream having a pressure p₂; and
d) Using the compressed steam stream for energy recovery thereby obtaining a stream comprising an aqueous condensate,
wherein
- in the at least one compressing step c) the temperature of the steam stream is increased to a temperature T₂;
- temperature T₂ is 50 K to 250 K, preferably 65 K to 150 K, most preferably 75 K to 125 K higher than the temperature T₁, and
- the ratio of pressure p₂ to pressure p₁, p₂/p₁, is 5 to 50.

2. The method according to claim 1, wherein the hot fluid stream from the chemical production process has a temperature T_{f} of from 20 to 150°C, more preferably from 25 to 130°C, most preferably from 30 to 110°C.

3. The method according to claim 1 or 2, wherein the aqueous condensate has a temperature T_{c} of from 40°C to 99°C, preferably from 50°C to 98°C, most preferably from 55°C to 95°C and/or a pressure p_{c} of from 1 to 10 bar(a), preferably from 2 to 9 bar(a), most preferably from 3 to 8 bar(a).

4. The method according to any one of the preceding claims, wherein temperature T₁ is in the range of from 30°C to 150°C, preferably from 40°C to 135°C, most preferably from 50°C to 100°C and/or pressure p₁ is in the range of from 0.04 bar(a) to 4.76 bar(a), preferably from 0.07 to 3.13 bar(a), most preferably from 0.12 to 1.01 bar(a).

5. The method according to any one of the preceding claims, wherein in the at least one compressing step c) the temperature of the heated first heat transfer fluid is increased to a temperature T₂ and temperature T₂ is in the range of from 125°C to 300°C, preferably from 135°C to 275°C, most preferably from 140°C to 250°C and/or pressure p₂ is in the range of from 3 bar(a) to 12 bar(a), preferably from 4 to 10 bar(a), most preferably from 5 to 8 bar(a).

6. The method according to any one of the preceding claims, wherein the temperature of the compressed steam stream after one or more, preferably after each compressing step is reduced so that the temperature of the compressed steam stream does not exceed 300°C.

7. The method according to claim 6, wherein the temperature of the compressed steam stream after each compressing step is reduced by combining the compressed steam stream with an aqueous condensate of higher pressure, preferably with a portion of the aqueous condensate of step d) preferably in a desuperheater.

8. The method according to any one of the preceding claims, wherein the aqueous condensate obtained from the used heated and compressed steam stream is used for thermally contacting the hot fluid stream with said aqueous condensate in the first heat exchanger.

9. The method according to any one of the preceding claims, wherein the stream comprising an aqueous condensate obtained from the compressed steam stream used for heat recovery is subjected to a vapour separation step to obtain a second steam stream and an aqueous condensate and the second steam stream is combined with the compressed steam stream, preferably after the first compressing step.

10. The method according to any one of the preceding claims, wherein the steam stream is subjected to a compression stage of a heat pump compressor in each compressing step to obtain a compressed steam stream having a pressure p₂.

11. A facility for recovering energy comprising
• a heat exchanger for transferring heat from a hot fluid stream to an aqueous condensate to obtain a steam stream having a temperature T₁ and a pressure pi;
• one or more, preferably 1 to 5, more preferably 2 to 4, most preferably 2 or 3 means for compressing the steam stream having a temperature T₁ and a pressure p₁ to obtain a compressed steam stream having a temperature T₂ and a pressure p₂ connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series;
• means for using the compressed steam stream having a pressure p₂ for energy recovery thereby obtaining a stream comprising an aqueous condensate;
• means for transporting the steam stream from the heat exchanger to the first upstream means for compressing the steam stream;
• optionally means for transporting the compressed steam stream from one upstream means for compressing the steam stream to the next downstream means for compressing the steam stream in the series of means for compressing the steam stream; and
• means for transporting the compressed steam stream having a pressure p₂ from the last means for compressing the steam stream in the series to the means for using the compressed steam stream having a pressure p₂ for energy recovery.

12. The production facility according to claim 11 further comprising
• means for cooling the compressed steam stream downstream of each means for compressing the steam stream, preferably means for combining the heated and compressed steam stream with an aqueous condensate of higher pressure, such as with a portion of the aqueous condensate obtained from the means for using the compressed steam stream having a pressure p₂ for energy recovery, most preferably a desuperheater.

13. The production facility according to claim 12 further comprising
• means for separating a second steam stream and an aqueous condensate from the stream comprising an aqueous condensate obtained from the means for using the compressed steam stream;
• means for transporting the stream comprising an aqueous condensate from the means for using the compressed steam stream for energy recovery to the means for separating a second steam stream and an aqueous condensate from the stream comprising an aqueous condensate; and
• means for transporting the second steam stream from the means for separating a second steam stream and an aqueous condensate to the means for cooling the compressed steam stream downstream the first upstream means for compressing the steam stream.

14. The production facility according to any one of claims 11 to 13 further comprising
• means for transporting the stream comprising an aqueous condensate from the means for using the compressed steam stream for energy recovery to the heat exchanger for transferring heat from a hot fluid stream of the chemical production process to the aqueous condensate of the stream comprising an aqueous condensate,
whereby the means for transporting the stream comprising an aqueous condensate preferably passes through the means for separating a second steam stream and an aqueous condensate from the stream comprising an aqueous condensate obtained from the means for using compressed steam stream for energy recovery.

15. The use of one or more, preferably 1 to 5, more preferably 2 to 4, most preferably 2 or 3 means for compressing a steam stream connected in series, preferably at least one, such as one or two, preferably one heat pump compressor(s), whereby each heat pump compressor comprises one or more, preferably 1 to 5, more preferably 2 to 4, most preferably 2 or 3 compression stages connected in series, in the method according to any one of claims 1 to 10 or the production facility according to any one of claims 11 to 14 for compressing a steam stream having a temperature T₁ and a pressure p₁ to obtain a compressed steam stream having a pressure p₂ for direct energy recovery.
